(19) Europäisches Patentamt
European Patent Office
Office européen des brevets

(11) **EP 3 192 161 B1**

(12) **EUROPEAN PATENT SPECIFICATION**

(45) Date of publication and mention
of the grant of the patent:
**14.11.2018 Bulletin 2018/46**

(51) Int Cl.:
*H02M 1/12* *(2006.01)*        *H02M 1/15* *(2006.01)*
*H02M 1/32* *(2007.01)*        *H02M 7/162* *(2006.01)*
*H02M 7/515* *(2007.01)*       *H02M 7/525* *(2006.01)*
*H02M 7/487* *(2007.01)*       *H02M 7/49* *(2007.01)*
*H02M 7/19* *(2006.01)*        *H02M 1/00* *(2006.01)*
*H02M 7/483* *(2007.01)*

(21) Application number: **14762034.8**

(22) Date of filing: **12.09.2014**

(86) International application number:
**PCT/EP2014/069532**

(87) International publication number:
**WO 2016/037666 (17.03.2016 Gazette 2016/11)**

(54) **VOLTAGE SOURCE CONVERTER AND ASSOCIATED METHOD**

SPANNUNGSQUELLENWANDLER UND ZUGEHÖRIGES VERFAHREN

CONVERTISSEUR DE SOURCE DE TENSION ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2017 Bulletin 2017/29**

(73) Proprietor: **ABB Schweiz AG**
**5400 Baden (CH)**

(72) Inventors:
• **SUBRAMANIAN, Sasitharan**
**S-771 32 Ludvika (SE)**
• **MAITI, Suman**
**Meinipur West**
**West Bengal 721124 (IN)**

(74) Representative: **Lundqvist, Alida Maria Therése**
**ABB AB**
**Intellectual Property**
**Forskargränd 7**
**721 78 Västerås (SE)**

(56) References cited:
**EP-A2- 0 055 203          WO-A1-2011/124258**
**WO-A1-2011/127980      WO-A1-2013/135300**
**WO-A1-2014/082657      WO-A1-2014/082661**
**WO-A2-2014/085591      AU-A- 4 587 972**
**US-A1- 2014 198 533**

• LIU Y H ET AL: "Multi-level voltage reinjection-a new concept in high voltage source conversion", IEE PROCEEDINGS: GENERATION, TRANSMISSION AND DISTRIBUT, INSTITUTION OF ELECTRICAL ENGINEERS, GB, vol. 151, no. 3, 15 May 2004 (2004-05-15), pages 290-298, XP006021885, ISSN: 1350-2360, DOI: 10.1049/IP-GTD:20040353

**Description**

**TECHNICAL FIELD**

The invention relates to a voltage source converter and associated method.

**BACKGROUND**

High Voltage Direct Current (HVDC) converters are mainly classified as Current Source Converters (CSC) and Voltage Source Converters (VSC). CSC converters are based on Line Commutated Converters (LCC) which contain thyristors. Thyristors have some inherent advantages such as being rugged, having low ON state losses, being easy to connect in series with each other, having a short time over-rating capability and having high power rating and being low cost. Moreover, thyristors are well established and commonly used components. However, LCC converters have a number of shortcomings: they may experience commutation failure, they require a strong alternating current (AC) grid, they do not support reactive power, have high harmonics, require polarity reversal for power reversal, leave a large footprints, are slow in control and unable to improve AC grid stability.

VSC converters are based on self commutating devices such as Insulated Gate Bipolar Transistors (IGBT), Integrated gate-Commutated Thyristors (IGCT), etc. These types of converters overcome many shortcomings of LCC. It has the following features: no commutation failure, it may be connected to a weak AC grid (also passive load), can support reactive power, has low harmonics, does not require polarity reversal for power reversal, is fast in control and able to improve AC grid stability.

However, VSC converters have the following disadvantages: higher ON state loss, higher switching loss, increased rating (due to fault current), frequent failure and higher cost.

Recently, VSC converters employing multiple cells have also been used, where each cell provides a voltage contribution in order to form a waveform that is used to obtain an AC signal.

These converters, which are also termed modular multilevel converters, (M2LC), i.e. multi-cell VSC converters, have some further advantages. They may be provided without filters. Also di/dt and dv/dt problems can be avoided. However they also provide a larger footprint due to cell capacitors and the mentioned problems with VSC converters. WO 2014/082657 A1 discloses a thyristor based voltage source converter comprising a number of valves, the valves comprising switching elements with anti-parallel diodes provided in a bridge for switching between two states, where the bridge is provided in at least one phase leg that stretches between two direct current poles and has at least one midpoint, which is connected to an alternating current terminal. The switching element of at least one valve is a thyristor, and the converter further comprises a commutation cell associated with the valve, where the commutation cell is controllable to reverse-bias the valve if it is to stop conducting current.

However, it is always of great benefit if fault handling abilities are improved. WO 20 11/ 124258 A1 discloses a power electronic converter, including a first and a second converter block, for use in high voltage direct current power transmission and reactive power compensation. The power electronic converter may be connected to an AC network via a transformer. Primary windings of the transformer are directly connected to the AC network while secondary and tertiary windings of the transformer are respectively connected to first and second AC terminals of the power electronic converter. The primary windings are mutually coupled with the secondary and tertiary windings so that the first and second AC terminals are connected in use to a respective phase of the AC network.

**SUMMARY**

It is an object to provide a voltage source converter which improves fault handling compared to the prior art. According to a first aspect, it is presented a voltage source converter comprising a first converter device. The first converter device comprises: a plurality of director valves, wherein each director valve comprises two anti-parallel thyristors provided in a bridge for switching between two states, the bridge being provided in at least one phase leg connected to two a first pair of direct current poles and comprising a midpoint connected to an alternating current, AC, terminal; and at least one commutation cell connected to a respective one of the at least one phase leg, wherein the commutation cell is controllable to reverse-bias a thyristor of at least one director valve of a connected phase leg when the thyristor is to stop conducting current. By providing anti-parallel thyristors in the director valves, greater control is possible. For instance the current between the DC poles can be turned off using the director valves.

The voltage source converter may further comprise: a three winding transformer; and a second converter device comprising the mentioned features of the first converter device. In such a case, for each phase, the AC terminal of the first converter device is connected to a first winding of the three winding transformer, the AC terminal of the second converter device is connected to a second winding of the three winding transformer, and an AC terminal of the voltage source converter is connected to a third winding of the three winding transformer; and each phase leg of the first converter device is connected serially with each phase leg of the second converter device between main direct current poles of the voltage source converter. By providing two converter devices, the voltage from the two converter devices can be vector added on the AC side, allowing great control of the AC voltages and phases both during normal operation and fault operation.

Each converter device may comprise at least three phases, and the voltage source converter may comprises three AC terminals, wherein, for each phase, the AC terminals of the first converter device are connected to a first winding of the three winding transformer the AC terminals of the second converter device are connected to a second winding of the three winding transformer, and the AC terminals of the voltage source converter are connected to a third winding of the three winding transformer.

The third winding may comprise, for each phase, a first winding part and a second winding part serially connected between an AC terminal and a counter terminal; and wherein the first winding part is magnetically coupled to the first winding and the second winding part is magnetically coupled to the second winding.

The voltage source converter may further comprise a control unit which is configured to control director valves of the first converter device and director valves of the second converter device such that a desired differential phase angle between AC voltages of the first converter device and the second converter device is achieved.

Each converter device may comprise a wave shaper comprising a plurality of wave shaper cells serially connected between the direct current poles of the converter device, and wherein a midpoint of the wave shaper is connected to each commutation cell of the converter device, wherein each wave shaper cell comprises a switching element and an energy storage.

Each converter device may comprise an interconnector between each commutation cell and its connected phase leg, each interconnector comprising antiparallel thyristors.

Each commutation cell may comprise a full-bridge cell.

Each wave shaper cell may comprise a full-bridge cell.

Each wave shaper cell may comprise a half-bridge cell.

The voltage source converter may further comprise a control unit being configured to detect a fault on the main direct current poles; and block DC current by controlling the firing angle of the director valves to be greater than 90°, blocking the wave shaper cells and blocking the interconnector.

According to a second aspect, it is presented a method of controlling a voltage source converter comprising a first converter device. The first converter device comprises: a plurality of director valves, wherein each director valve comprises two anti-parallel thyristors provided in a bridge for switching between two states, the bridge being provided in at least one phase leg connected to two a first pair of direct current poles and comprising a midpoint connected to an alternating current, AC, terminal; and at least one commutation cell connected to a respective one of the at least one phase leg. The method comprises the step of: controlling a commutation cell to reverse-bias a thyristor of at least one director valve of a connected phase leg when the thyristor is to stop conducting current.

The voltage source converter may further comprise a three winding transformer; and a second converter device. The second converter device comprises the mentioned features of the first converter device, wherein, for ea_ch phase, the AC terminal of the first converter device is connected to a first winding of the three winding transformer, the AC terminal of the second converter device is connected to a second winding of the three winding transformer, and an AC terminal of the voltage source converter is connected to a third winding of the three winding transformer; and each phase leg of the first converter device is connected serially with each phase leg of the second converter device between main direct current poles of the voltage source converter. The method then further comprises the step of: controlling director valves of the first converter device and director valves of the second converter device such that a desired differential phase angle between AC voltages of the first converter device and the second converter device is achieved.

The method may further comprise the steps of: detecting a fault being a short circuit on all AC terminals; and handling the fault by controlling the director valves such that the differential phase angle is essentially 180 degrees for all phases. This can e.g. be achieved by controlling the director valves of both stations and adjusting DC side voltage.

The method may further comprise the steps of: detecting a fault being a short circuit on only one of the AC terminals; and handling the fault by controlling the director valves of the first converter device and the second converter device such that the fault is counteracted. This can e.g. be achieved by controlling the director valves of both stations and adjusting DC side voltage.

The method may further comprise the steps of: detecting a fault on the main direct current poles; and handling the fault by blocking DC current by controlling the firing angle of the main bridge director valves to be greater than 90°, blocking the wave shaper cells; and blocking the interconnector.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of example, with reference to the accompanying drawings, in which:

Fig 1 shows a voltage source converter according to one embodiment of the invention;

Figs 2A-B show voltage source converter according to two embodiments each comprising two converter devices;

Fig 3 is schematic graph illustrating an AC voltage generated by the voltage source converter of Fig 1 or 2;

Fig 4 is schematic phasor diagram illustrating resultant AC voltage generated by the voltage source converters of Fig 2A-B;

Fig 5 is schematic diagram illustrating an embodiment of the transformer of Fig 2A;

Fig 6 is schematic graph illustrating a DC ripple in two operational modes of the embodiments of Figs 1 and 2;

Figs 7A-C are schematic diagrams illustrating embodiments of converter cells of the converter of Figs 1 and 2; and

Fig 8 is a flow chart illustrating a method performed in the voltage source converter of Fig 1 or Figs 2A-B.

## DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

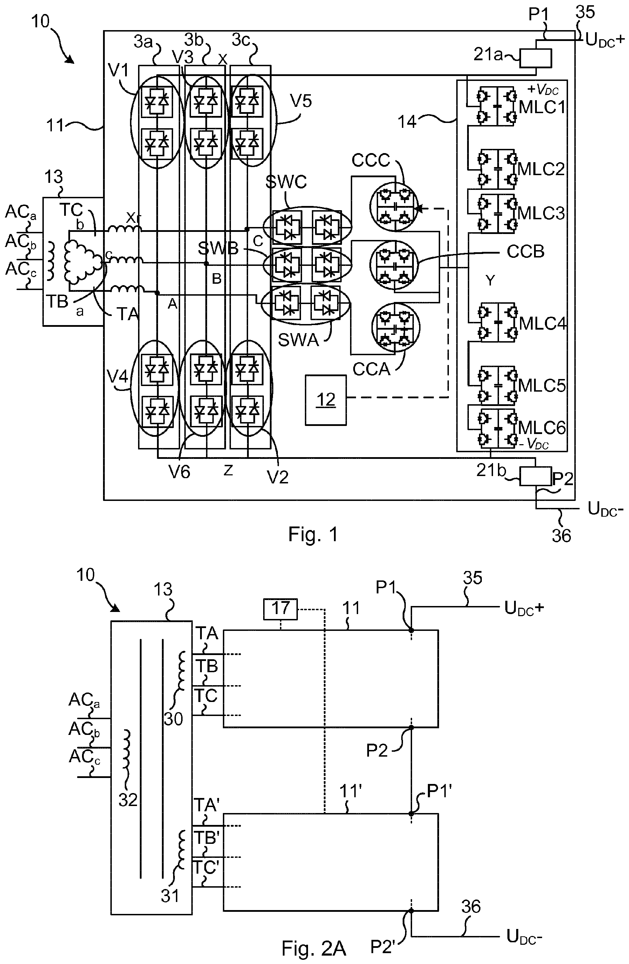

Fig 1 shows a converter 10 according to a first embodiment of the invention comprising a single converter device 11. The converter device 11 comprises a three-phase bridge made up of a first phase leg 3a, a second phase leg 3b and a third phase leg 3c. The phase legs 3a-c are more particularly connected between a first direct current (DC) pole P1 and a second DC pole P2. The first pole P1 is connected to a positive main DC pole 35, providing a first voltage $U_{DC+}$ and the second pole P2 is connected to a negative main DC pole 36, providing a second voltage $U_{DC-}$. Each one of the first and second voltages $U_{DC+}$, $U_{DC-}$ can be positive, negative or zero, as long as there is a difference between the voltages. The mid points of the phase legs 3a-c are each connected to a corresponding alternating current terminal TA, TB, TC, optionally via a respective reactor Xr and the AC terminals are in turn connected to windings of a transformer 13, which windings in this case as an example are delta-connected. On the other side of the transformer 13 there are windings connected to three AC terminal ACa, ACb, ACc of the converter device 11, e.g. for connection to an AC grid. The phase legs 3a-c comprise valves provided in a converter bridge. In the bridge there is a first valve V1 in a first half of a first phase leg 3a and a fourth valve V4 in a second half of the first phase leg 3a, where the midpoint of the first phase leg 3a is connected to the first AC terminal TA forming a first AC phase. The second phase leg 3b comprises as third valve V3 in a first half and a sixth valve V6 in a second half, where the midpoint of the second phase leg 3b is connected to the second AC terminal TB forming a second AC phase. In the bridge there is a finally a fifth valve V5 in a first half of the third phase leg 3c and a second valve V2 in a second half of the third phase leg 3c, where the midpoint of the third phase leg 3c is connected to the third AC terminal TC forming a third AC phase. The bridge is thus provided in at least one phase leg that stretches between two direct current poles Pi, P2 and has at least one midpoint, which is connected to an alternating current terminal.

The valves, which may each be termed director valves, are formed through the use of two anti-parallel thyristors. These are provided in pairs. The upper halves of the phase legs 3a-c are furthermore connected to the first pole P1 via an optional first filter 21a, while the lower halves of the phase legs 3a-c are connected to the second DC pole P2 via an optional second filter 21b. The phase legs 3a-b are in this ways connected in parallel between the poles P1 and P2, where the connection to the first pole P1 is a first DC point marked X and the connection to the second pole P2 is a second DC point marked Z. The upper halves of the phase legs 3a-c are all being connected to the optional first filter 21a and the lower halves of the phase legs 3a-c all being connected to the optional second filter F2. There is also a wave shaper 14 comprising a plurality of wave shaper cells MLC1-6 serially connected between the DC poles. The wave shaper cells MLC1-6 together provide multiple voltage levels to provide a more sinusoidal AC wave shape. The wave shaper cells are converter cells and can e.g. be full-bridge cells (as shown), half-bridge cells (not shown) or a combination of full-bridge cells and half-bridge cells (not shown). The number of wave shaper cells in Fig 1 is only and example and more or fewer wave shaper cells can be used.

The midpoint of the wave shaper 14 is connected to the midpoints of each of the phase legs 3a-c of the bridge via a corresponding intermediate branch. The midpoint is furthermore marked with a Y, which forms a third DC point. There is thus here a first intermediate branch interconnecting the midpoint of the first phase leg 3a with the midpoint of the wave shaper 14, a second intermediate branch interconnecting the midpoint of the second phase leg 3b with the midpoint of the wave shaper 14 and a third intermediate branch interconnecting the midpoint of the third phase leg 3c with the midpoint of the wave shaper 14. Each intermediate branch comprises bidirectional switches and a commutation cell. The first intermediate branch therefore comprises a first bidirectional switch SWA and a first commutation cell CCA, the second intermediate branch comprises a second bidirectional switch SWB and a second commutation cell CCB and the third intermediate branch comprises a third bidirectional switch SWC and a third commutation cell CCC.

There is furthermore a control unit 12 controlling the operation of the converter device 11. In Fig 1, the control paths from the control unit are not shown in order not to complicate Fig 1 unnecessarily. The control unit 12 controls second commutation cells as all of the director valves, bidirectional switches and multilevel cells, both in normal operation and in fault handling.

The filters 21a-b can e.g. be provided in the form of full-bridge cells, which may be provided e.g. for filtering harmonics.

As described above, each valve uses anti-parallel thyristors as switching elements. Also the bidirectional switches SWA, SWB, SWC are provided as anti-parallel thyristors. Optionally, each bidirectional switch comprises two pairs of anti-parallel thyristors. These bidirectional switches SWA, SWB, SWC may, as an alternative, also be provided through the use of transistors, e.g. IGBTs.

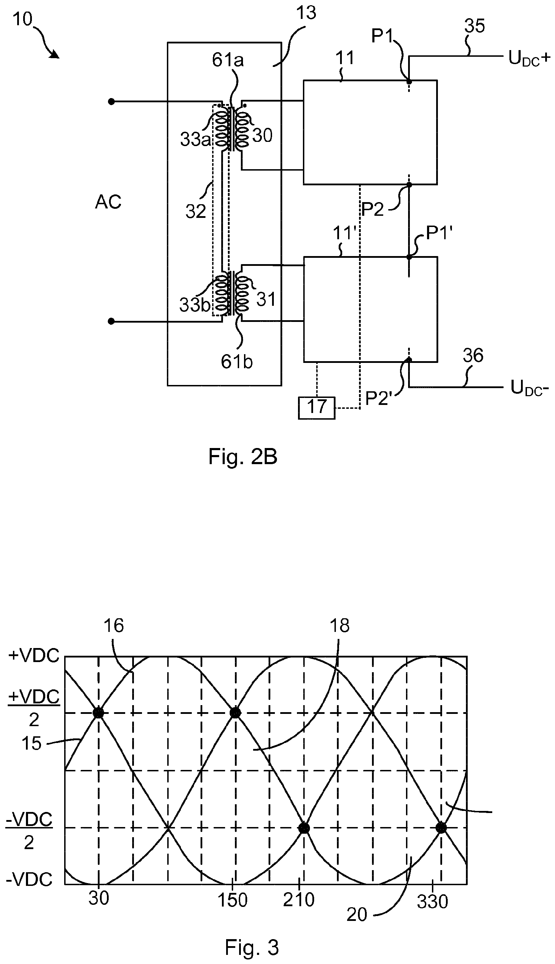

The operation of the converter device 11 is now described with combined reference to Fig 3 which shows one period of the three AC voltages that are provided by the three phase terminals of the converter device 11. The operation will be described for one of the phases, for instance the first phase A and the voltage of this phase have a number of sections, a first section 14 between o and 30 degrees, a second section 16 between 30 and 150 degrees, a third section 18 between 150 and 210 degrees, a fourth section 20 between 210 and 330 degrees and a fifth section 22 between 330 and 360 degrees. The fifth section 22 will continue to the first section of a following period.

Starting with the second section 16, the first valve V1 will be conducting, which will place the first AC terminal at a high voltage level. Through the operation of the wave shaper 14, this high voltage will vary. The wave shaper 14 is more particularly controlled by the control unit 12 so that the voltage varies stepwise from half the positive maximum voltage $U_{DC+}/2$ to the maximum positive voltage $U_{DC+}$ and back to half the maximum voltage $U_{DC+}/2$ between 30 and 150 fifty degrees. Thereafter the first valve V1 stops conducting followed by the first intermediate branch conducting between 150 and 210 degrees for forming the third section 18, where the first intermediate branch will essentially provide a zero voltage, which is varied through the use of the wave shaper 14 from half the positive maximum voltage $U_{DC+}/2$ to half the maximum negative voltage $U_{DC}/2$.

Thereafter, the fourth valve V4 will start conducting, which will place the first AC terminal TA at a low voltage level. Through the operation of the wave shaper 14, this low voltage will vary. The wave shaper 14 is more particularly controlled so that the voltage varies from half the maximum negative voltage $U_{DC}/2$ to the maximum negative voltage $U_{DC-}$ and back to half the maximum negative voltage $U_{DC+}/2$ between 210 and 330 degrees for forming the fourth section 20. Thereafter, the fourth valve V4 is turned off, which is again followed by the first intermediate branch starting to conduct, which it does between 330 degrees of the first period to 30 degrees of a following period for providing the fifth section 22 and a first section of a following period. The bidirectional switches then essential provide a zero voltage, which is varied using the wave shaper 14, from half the negative maximum voltage $U_{DC}/2$, via a zero voltage to half the maximum positive voltage $U_{DC+}/2$, for providing the voltage of the fifth section 22. As can be understood from what has been described above this operation is also valid for the first section 14 of the first period. It can furthermore be seen that the bridge of valves switches, for each phase, between two different states and the intermediate branch provided an intermediate state, while the wave shaper 14 provide voltage variations in relation to each state for forming an AC waveform.

The same type of operation is provided for the other phases in order to obtain the three-phase voltages shown in Fig 3. This means that when the first valve V1 stops to conducts at 150 degrees, then the third valve V3 of the second branch conducts between 150 and 270 degrees, followed by the fifth valve V5 conducting between 270 degrees and thirty degrees of the following period. In the same manner, the conduction of the fourth valve V4 is preceded by the conduction of the second valve V2 between 90 and 210 degrees and followed by the conduction of the sixth valve between 330 degrees and the 90 degrees of the following period.

As may thus be seen, each phase A, B, C is connected at each DC point X, Y, Z for a duration of 120° as is indicated above. At any instant, three phases are connected to one of the three DC points X, Y, Z and the three-phase bridge is operated as 120° mode of operation. When two phase voltages are equal, the phase points are swapped between the DC points. The wave shaper 14 is operated as per the sine wave form for each phase. The upper and lower valves of the phase legs are complementarily operated and thereby it is possible to obtain a three phase voltage with a small number of switch operations.

Above was described the general operation of a converter of the type shown in Fig 1. However the valves and bi-directional switches comprise thyristors. As is well known a thyristor is easily turned on. However, it cannot be turned off unless it is subjected to a negative voltage. The commutation cells CCA, CCB, CCC are provided for this purpose, namely to provide a negative voltage across the thyristors to thereby switch them off. In this way, it is then possible to have a thyristor operate as a fully controllable switching element, such as an Insulated Gate Bipolar Transistor (IGBT), and thereby to operate the converter as a voltage source converter.

As can be seen from the description made above, the thyristor based VSC comprises a three-phase bridge based on thyristors, a string of series connected wave shaper cells and intermediate branches of bi-directional thyristors connecting the mid-points of the three-phase bridge with the midpoint of the wave shaper. A commutation cell is in this first embodiment added for each phase in the intermediate branches, to commutate the thyristors. A full-bridge cell can be used as commutation cell since it provides three-level voltages. During phase cross-over, the commutation cell offers a negative voltage across the thyristors and it provides a small negative current for thyristor commutation.

The valves and the bi-directional switches operate at the fundamental frequency. Anti-parallel thyristors are used as switching device for the valves and bi-directional switches in order to benefit from the advantages of this type of component. To commutate the thyristors, commutation cells are used. To commutate a valve comprising a thyristor, a commutation cell reverse-biases the valve. A commutation cell is thereby associated with at least one valve and controllable to reverse-bias the thyristor of this valve through providing a negative voltage across it if it is to stop conducting current. A negative voltage is here a voltage providing a current having a direction that is the opposite of the current conducting direction of the thyristor.

Since the valves comprise anti-parallel thyristors, and the whole structure of the converter device 11 is symmetrical, the DC poles can be reversed without any physical reconfiguration. This can be utilised, e.g. for power reversal.

Moreover, the firing angle of the thyristors in the valves can be controlled to obtain reduced DC voltage, e.g. during DC voltage increase in DC fault recovery.

Figs 2A-B show voltage source converter according to two embodiments each comprising two converter devices. Looking first to Fig 2A, the voltage source converter 10 comprises both a first converter device 11 and a second converter device 11'. Each one of the converter devices 11,11' is a converter device as described above with reference to Fig 1.

Furthermore, there is a three winding transformer 13. For each phase, the AC terminal TA, TB, TC of the first converter device 11 is connected to a first winding 30 of the three winding transformer 13. Analogously, for each phase, the respective AC terminal TA', TB', TC' of the second converter device 11' is connected to a second winding 31 of the three winding transformer 13. Moreover, for each phase, an AC terminal ACa, ACb, ACc of the voltage source converter 10 is connected to a third winding 32 of the three winding transformer 13.

The two converter devices 11, 11' are connected serially between the main direct current poles 35, 36. Each phase leg of the first converter device 11 is thus connected serially with each phase leg of the second converter 11' device between the main direct current poles 35, 36 of the voltage source converter 10. Compared to the converter device 11 of Fig 1, each converter device 11, 11' of Fig 2A only needs to have half of the rating.

An overall control unit 17 controls the operation of the two converter devices 11, 11'.

Looking now instead to Fig 2B, the third winding 32 of the three winding transformer 13 here comprises, for each phase, a first winding part 33a and a second winding part 33b. These winding parts 33a-b are serially connected between an AC terminal and a counter terminal. The AC terminal can e.g. be one of the AC terminals ACa, ACb, ACc, e.g. for connecting to the grid. The counter terminal can e.g. be another one of the AC terminals ACa, ACb, ACc, resulting in a delta connection, or ground, resulting in a star connection. The first winding part 33a is magnetically coupled to the first winding 30 and the second winding part 33b is magnetically coupled to the second winding 31.

In the embodiment of Fig 2A, the contributions from the converter devices 11, 11' are added magnetically to the AC side using the common core. In the embodiment of Fig 2B, the contributions from the converter devices 11, 11' are added electrically using the same current.

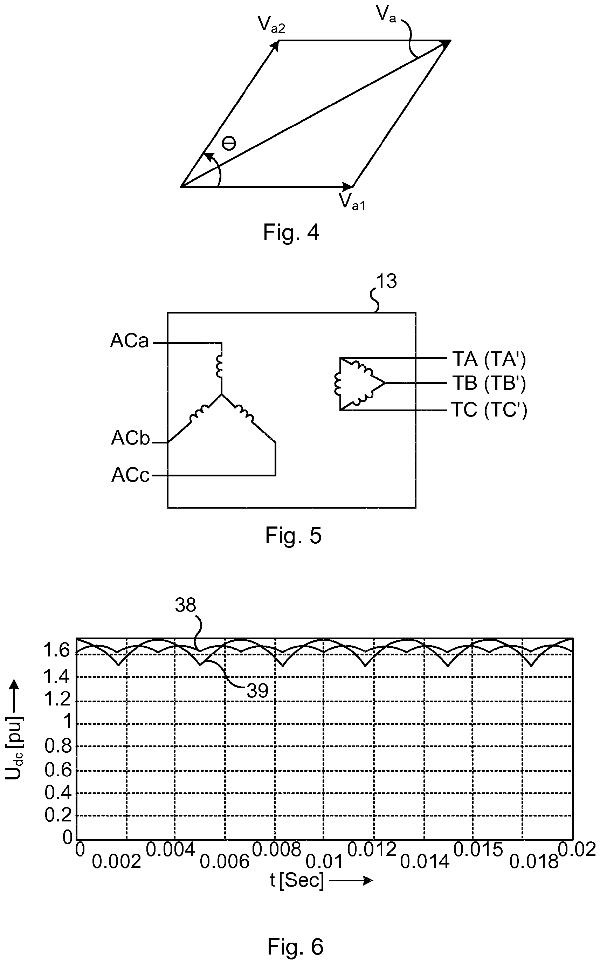

Referring now to Fig 4, using the two converter devices 11, 11' connected via the three winding transformer 13 to the AC terminals ACa, ACb, ACc, as shown e.g. in Figs 2A-B, the voltage of each AC terminal ACa, ACb, ACc is the result of a vector addition of corresponding voltages from the two converter devices. Looking at Fig 4 for phase A, the voltage vector Va on the AC terminal ACa is the result of a vector addition of a voltage vector Va1 of the first converter device 11 and a voltage vector Va2 of the second converter device 11'.

Using the two vector addition which is possible due to the two converter devices, it is possible to independently control P (active power) and Q (reactive power) is possible. This is achieved by the overall control unit 17 controlling the differential phase angle $\Theta$ between the two component voltages Va1, Va2. Moreover, AC voltage and DC voltage are decoupled since, by varying a phase shift $\Theta$, the magnitude of Va can be controlled between o and |Va1| + |Va2|.

Fig 5 is schematic diagram illustrating an embodiment of the transformer of Fig 1 and 2. Here, the converter side is connected to the first converter 11 and optionally in the same way (but in a separate winding) to the second converter 11'. The converter side is arranged in delta mode. This means that each phase terminal TA, TB, TC (TA', TB', TC') is separated from other phase terminal via a winding and there is no neutral point. The AC port side is connected to the AC terminals ACa, ACb, ACc and is connected in star mode. This means that each phase is connected via a winding to a neutral point N. Optionally, the neutral point is connected to ground.

Now, fault handling will be described in some more detail.

One fault situation is an LLLG fault where all AC terminals are short circuited. In such a case, all three lines on the grid side are short-circuited to ground. In the embodiments of Figs 2A-B, by setting a phase shift of 180 degrees, the magnitude of Va can be set to zero (or essentially zero) to isolate the fault on the AC side.

Another fault situation is an LG fault, where one line on the grid side is short-circuited to ground. This will be now analysed using sequence components in a situation where the first phase A is short-circuited to ground. The equivalent analysis can be applied for the second phase B and for the third phase C.

The grid side voltages contain positive, negative and zero sequence components. The sequence components can be derived through the following transformation.

$$\begin{bmatrix} U^+ \\ U^- \\ U^0 \end{bmatrix} = \frac{1}{3} \begin{bmatrix} 1 & a & a^2 \\ 1 & a^2 & a \\ 1 & 1 & 1 \end{bmatrix} \begin{bmatrix} U_A \\ U_B \\ U_C \end{bmatrix} \tag{1}$$

Where $U^+$ is the positive sequence voltage component, $U^-$ is the negative sequence voltage component and $U^0$ is the zero sequence voltage component and a is $1\angle 120^0$, i.e. a phase with magnitude 1 and phase angle 120 °.

Under LG fault, the above equation can be written as:

$$\begin{bmatrix} U^+ \\ U^- \\ U^0 \end{bmatrix} = \frac{1}{3} \begin{bmatrix} 1 & 1\angle 120^0 & 1\angle 240^0 \\ 1 & 1\angle 240^0 & 1\angle 120^0 \\ 1 & 1 & 1 \end{bmatrix} \begin{bmatrix} 0 \\ U_m \angle 120^0 \\ U_m \angle 240^0 \end{bmatrix} \tag{2}$$

Solving the above equation,

$U^+ = -0.33 U_m \angle 0^0$, $U^- = 0.66 U_m \angle 0^0$ and $U^0 = -0.33 U_m \angle 0^0$

Therefore,

$$U_A^+ = -0.33 U_m \angle 0^0$$
$$U_B^+ = -0.33 U_m \angle 120^0$$
$$U_C^+ = -0.33 U_m \angle 240^0 \tag{3}$$

$$U_A^- = 0.66 U_m \angle 0^0$$
$$U_B^- = 0.66 U_m \angle 120^0$$
$$U_C^- = 0.66 U_m \angle 240^0 \tag{4}$$

$$U_A^0 = -0.33 U_m \angle 0^0$$
$$U_B^0 = -0.33 U_m \angle 0^0$$
$$U_C^0 = -0.33 U_m \angle 0^0 \tag{5}$$

Zero sequence voltage does not appear in the converter side when the transformer is in a delta-star configuration. Hence, the converter side voltages can be expressed as follows.

$$U_a = U_A^+ + U_A^- = -0.33U_m\angle 0 + 0.66U_m\angle 0 = 0.33U_m\angle 0$$
$$U_b = U_B^+ + U_B^- = -0.33U_m\angle 120 + 0.66U_m\angle 240 = 0.87U_m\angle 101$$
$$U_c = U_C^+ + U_C^- = -0.33U_m\angle 240 + 0.66U_m\angle 120 = 0.87U_m\angle -101 \qquad (6)$$

These voltages can be generated by producing positive sequence voltages using the first converter device 11 and negative sequence voltages using the second converter device 11'. However, it is to be noted that this technique will require increased rating ($0.66U_m$ instead of $0.5U_m$) of the lower converter. In other words, the LG fault is counteracted by controlling the director valves to achieve the voltages of (6).

Another fault situation is a fault on the DC side, where the two terminals on the DC side are short-circuited. In this situation, the control unit 12 and/or 17 control the bidirectional switches SWA, SWB, SWC and the wave shaper cells MLC1-6 to enter a blocking mode when the occurrence of dc side fault is detected. The three phase bridge is operated above 90° firing angle. In this way, the energy in a line inductance (defined as the inductance between the converter 10 and the fault location) is fed back to AC and the fault current decays quickly. The voltages in the energy storage in the wave shaper cells counteract the trapped current. The capacitors of the wave shaper cells counteract the trapped current when switching elements are blocked. At that time, current in the fault loop is flowing through anti-parallel diodes (of the wave shaper cells) and against the cell capacitor voltage. In this way, the trapped current is kept low.

Fig 6 is schematic graph illustrating a DC ripple in two operational modes of the embodiments of Figs 1 and 2. The 6n harmonics may appear at the DC side when operating of this converter. The filters 21a-b at dc side, as shown in Fig 1 can be used to reduce these harmonics.

Moreover, when one of the embodiments of Figs 2A-B is used, the ripple can be further reduced by employing a 30 phase shift between the voltages of the wave shapers 14 of the upper and lower converters. Using the 30 degree phase shift, a valve of the two converter devices 11, 11' is pulsed every 30 degrees, compared to every 60 degrees with zero phase shift, which is a reason why the ripple is reduced with the 30 degree phase shift.

As seen in Fig 6, a voltage 38 on the DC side where the thirty degree phase shift is employed exhibits a significantly reduced ripple compared to a voltage 39 on the DC side where no phase shift is employed

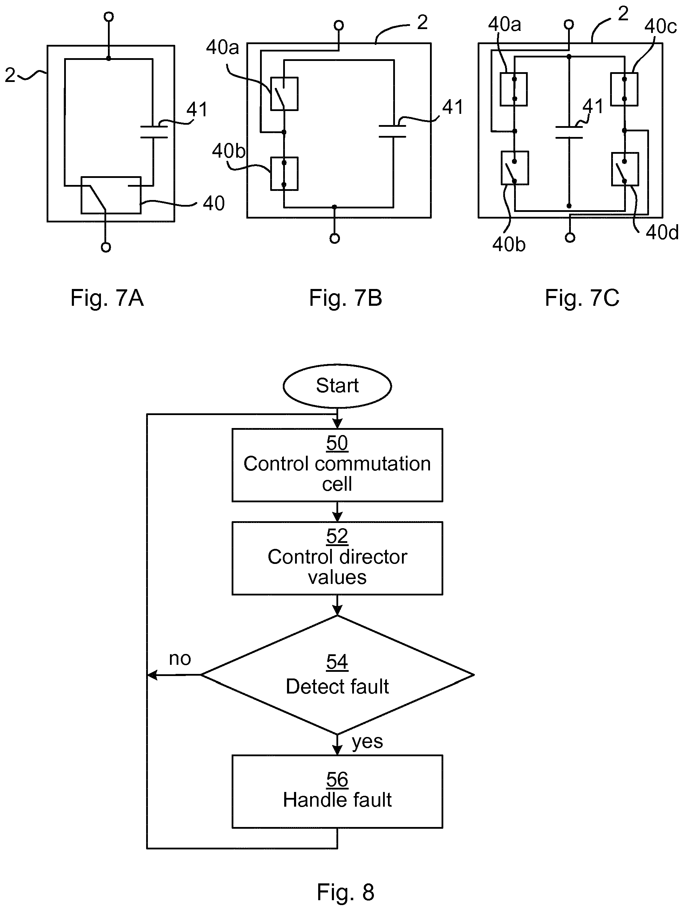

Figs 7A-C are schematic diagrams illustrating embodiments of converter cells of the converter of Figs 1 and 2. Each one of the converter cells 2 can be used for wave shaper cells MLC1-6 and commutation cells CCA-C as described above.

Fig 7A illustrates a converter cell 2 comprising a switching element 40 and an energy storage element 41 in the form of a capacitor. The switching element 40 can for example be implemented using an insulated gate bipolar transistor (IGBT), Integrated Gate-Commutated Thyristor (IGCT), a Gate Turn-Off thyristor (GTO), or any other suitable high power semiconductor component. In fact, the converter cell 2 of Fig 7A can be considered to be to be a more general representation of the converter cell shown in Fig 7B, which will be described here next.

Fig 7B illustrates a converter cell 2 implementing a half-bridge structure. The converter cell 2 here comprises a leg of two serially connected switching elements 40a-b, e.g. in the form of IGBTs, IGCTs, GTOs, etc. Optionally, there is an antiparallel diode connected across each switching element 40a-b (not shown). An energy storage element 41 is also provided in parallel with the leg of switching elements 40a-b. The voltage synthesised by the converter cell 2 can thus either be zero or the voltage of the energy storage element 41.

Fig 7C illustrates a converter cell 2 implementing a full-bridge structure. The converter cell 2 here comprises four switching elements 40a-d, e.g. IGBTs, IGCTs, GTOs, etc. Optionally, there is an antiparallel diode connected across each switching element 40a-d (not shown). An energy storage element 41 is also provided in parallel across a first leg of two switching elements 40a-b and a second leg of two switching elements 40c-d. Compared to the half-bridge of Fig 7B, the full-bridge structure allows the synthesis of a voltage capable of assuming both signs, whereby the voltage of the converter cell can either be zero, the voltage of the energy storage element 41, or a reversed voltage of the energy storage element 41.

Fig 8 is a flow chart illustrating a method performed in the voltage source converter of Fig 1 or Figs 2A-B.

In a control commutation cell step 50, the commutation cells CCA, CCB, CCC are controlled to reverse-bias a thyristor of at least one director valve of a connected phase leg 3a-c when the thyristor is to stop conducting current.

In a control director valves step 52, director valves of the first converter device and director valves of the second converter device such that a desired differential phase angle between AC voltages of the first converter device and the second converter device is achieved.

In conditional detect fault step 54, it is checked whether a fault can be detected. The fault can e.g. be an LLLG fault, an LG fault or a DC fault.

In the handle fault step 56, action appropriate for the fault is taken.

For instance, when a DC fault is detected, the DC current is blocked by controlling the firing angle of the director valves V1-V6 to be greater than 90°, blocking the wave shaper cells; and blocking the interconnector.

When the detected fault is a short circuit on all AC terminals, i.e. an LLLG fault, the director valves are controlled such that the differential phase angle is essentially 180 degrees for all phases.

When the detected fault is a short circuit on only one AC terminal, i.e. an LG the director valves such that the fault is counteracted, e.g. by applying the voltages of equation (6).

It is to be noted that while the embodiments shown herein relate to three phases, the same principles can be applied for any number of phases.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A voltage source converter (10) comprising a first converter device (11) comprising:

   a plurality of director valves (V1, V2, V3, V4, V5, V6), wherein each director valve comprises two anti-parallel thyristors provided in a bridge for switching between two states, the bridge being provided in at least one phase leg (3a-c) connected to a first pair of direct current poles (P1, P2) and comprising a midpoint connected to an alternating current, AC, terminal (TA, TB, TC); and
   at least one commutation cell (CCA, CCB, CCC) connected to a respective one of the at least one phase leg (3a-c), wherein the commutation cell (CCA, CCB, CCC) is controllable to reverse-bias a thyristor of at least one director valve of a connected phase leg (3a-c) when the thyristor is to stop conducting current;
   wherein the voltage source converter (10), further comprises:

   a three winding transformer (13); and
   a second converter device (11') comprising the mentioned features of the first converter device (11);

   wherein, for each phase, the AC terminal of the first converter device (11) is connected to a first winding of the three winding transformer (13), the AC terminal of the second converter device (11') is connected to a second winding of the three winding transformer (13), and an AC terminal (ACa, ACb, ACc) of the voltage source converter (11) is connected to a third winding of the three winding transformer (13);
   each phase leg of the first converter device (11) is connected serially with each phase leg of the second converter (11') device between main direct current poles of the voltage source converter (10);
   wherein the third winding (32) comprises, for each phase, a first winding part (33a) and a second winding part (33b) serially connected between an AC terminal and a counter terminal; and wherein the first winding part (33a) is magnetically coupled to the first winding (30) and the second winding part (33b) is magnetically coupled to the second winding (31).

2. The voltage source converter (10) according to claim 1, wherein each converter device (11, 11') comprises at least three phases, the voltage source converter (10) comprises three AC terminals, wherein, for each phase, the AC terminals of the first converter device (11) are connected to a first winding (30) of the three winding transformer (13) the AC terminals of the second converter device (11') are connected to a second winding (31) of the three winding transformer (13), and the AC terminals of the voltage source converter (10) are connected to a third winding (32) of the three winding transformer (13).

3. The voltage source converter (10) according to any one of claims 1 to 2, further comprising a control unit (17) which is configured to control director valves of the first converter device (11) and director valves of the second converter device (11') such that a desired differential phase angle between AC voltages of the first converter device and the second converter device is achieved.

4. The voltage source converter (10) according to any one of the preceding claims, wherein each converter device (11, 11') comprises a wave shaper (14) comprising a plurality of wave shaper cells serially connected between the direct current poles (P1, P2) of the converter device (11,11'), and wherein a midpoint of the wave shaper (14) is connected to each commutation cell (CCA, CCB, CCC) of the converter device (11, 11'), wherein each wave shaper cell comprises a switching element (40, 40a-d) and an energy storage (41), wherein the wave shaper is thus configured to provide multiple voltage levels to provide a sinusoidal AC wave shape.

5. The voltage source converter (10) according to any one of the preceding claims, wherein each converter device comprises an interconnector (SWA, SWB, SWC) between each commutation cell and its connected phase leg (3a-c), each interconnector comprising antiparallel thyristors.

6. The voltage source converter (10) according to any one of the preceding claims, wherein each commutation cell (CCA, CCB, CCC) comprises a full-bridge cell.

7. The voltage source converter (10) according to any one of the preceding claims, wherein each wave shaper cell comprises a full-bridge cell.

8. The voltage source converter (10) according to any one of the preceding claims, wherein each wave shaper cell comprises a half-bridge cell.

9. The voltage source converter (10) according to any one of the preceding claims, further comprising a control unit (12, 17) being configured to detect a fault on the main direct current poles ($U_{DC+}$, $U_{DC-}$); and block DC current by controlling the firing angle of the director valves (V1-V6) to be greater than 90°, blocking the wave shaper cells and blocking the interconnector.

10. A method of controlling a voltage source converter (10) comprising a first converter device (11) comprising: a plurality of director valves (V1, V2, V3, V4, V5, V6, SWA, SWB, SWC), wherein each director valve comprises two anti-parallel thyristors provided in a bridge for switching between two states, the bridge being provided in at least one phase leg (3a-c) connected to a first pair of direct current poles (P1, P2) and comprising a midpoint connected to an alternating current, AC, terminal (TA, TB, TC); and at least one commutation cell (CCA, CCB, CCC) connected to a respective one of the at least one phase leg (3a-c), wherein the voltage source converter (10) further comprises a three winding transformer (13); and a second converter device (11') comprising the mentioned features of the first converter device (11), wherein, for each phase, the AC terminal of the first converter device (10) is connected to a first winding of the three winding transformer (13), the AC terminal of the second converter device (10') is connected to a second winding of the three winding transformer (13), and an AC terminal of the voltage source converter (10) is connected to a third winding of the three winding transformer (13); and each phase leg of the first converter device (11) is connected serially with each phase leg of the second converter (11') device between main direct current poles of the voltage source converter (10), wherein the third winding (32) comprises, for each phase, a first winding part (33a) and a second winding part (33b) serially connected between an AC terminal and a counter terminal; and wherein the first winding part (33a) is magnetically coupled to the first winding (30) and the second winding part (33b) is magnetically coupled to the second winding (31), the method comprising the step of:

   controlling (50) a commutation cell (CCA, CCB, CCC) to reverse-bias a thyristor of at least one director valve of a connected phase leg (3a-c) when the thyristor is to stop conducting current; and
   controlling (52) director valves of the first converter device and director valves of the second converter device such that a desired differential phase angle between AC voltages of the first converter device and the second converter device is achieved.

11. The method according to claim 10, further comprising the steps of:

   detecting a fault (54) being a short circuit on all AC terminals (TA, TB, TC); and
   handling the fault (56) by controlling the director valves of the first converter device (11) and the second converter device (11') such that the differential phase angle is essentially 180 degrees for all phases.

12. The method according to claim 10, further comprising the steps of:

   detecting a fault (54) being a short circuit on only one of the AC terminals (TA, TB, TC); and
   handling the fault (56) by controlling the director valves of the first converter device (11) and the second converter device (11') such that the fault is counteracted.

13. The method according to claim 10, further comprising the steps of:

   detecting a fault (54) on the main direct current poles; and
   handling the fault (56) by blocking DC current by controlling the firing angle of the director valves (V1-V6) to be greater than 90°, blocking the wave shaper cells; and blocking the interconnector.

**Patentansprüche**

1. Spannungsgeführter Umrichter (10) umfassend eine erste Umrichtereinrichtung (11), die Folgendes umfasst:

   mehrere Director-Ventile (V1, V2, V3, V4, V5, V6), wobei jedes Director-Ventil zwei antiparallele Thyristoren umfasst, die in einer Brücke zum Schalten zwischen zwei Zuständen bereitgestellt sind, wobei die Brücke in mindestens einem Phasenzweig (3a-c) bereitgestellt ist, der mit einem ersten Paar von Gleichstrompolen (P1, P2) verbunden ist und eine Mittelpunkt umfasst, der mit einem Wechselstrom- bzw. AC-Anschluss (TA, TB, TC) verbunden ist; und

   mindestens eine Kommutierungszelle (CCA, CCB, CCC), die mit einem jeweiligen des mindestens einen Phasenzweigs (3a-c) verbunden ist, wobei die Kommutierungszelle (CCA, CCB, CCC) steuerbar ist, einen Thyristor von mindestens einem Director-Ventil eines verbundenen Phasenzweigs (3a-c) in Sperrrichtung vorzuspannen, wenn der Thyristor das Leiten von Strom stoppen soll;
   wobei der spannungsgeführte Umrichter (10) ferner Folgendes umfasst:

   einen Dreiwicklungstransformator (13); und
   eine zweite Umrichtereinrichtung (11'), die die erwähnten Merkmale der ersten Umrichtereinrichtung (11) umfasst;

   wobei, für jede Phase, der AC-Anschluss der ersten Umrichtereinrichtung (11) mit einer ersten Wicklung des Dreiwicklungstransformators (13) verbunden ist, der AC-Anschluss der zweiten Umrichtereinrichtung (11') mit einer zweiten Wicklung des Dreiwicklungstransformators (13) verbunden ist und ein AC-Anschluss (ACa, ACb, ACc) des spannungsgeführten Umrichters (11) mit einer dritten Wicklung des Dreiwicklungstransformators (13) verbunden ist;
   wobei jeder Phasenzweig der ersten Umrichtereinrichtung (11) seriell mit jedem Phasenzweig der zweiten Umrichtereinrichtung (11') zwischen Haupt-Gleichstrompolen des spannungsgeführten Umrichters (10) geschaltet ist;
   wobei die dritte Wicklung (32), für jede Phase, einen ersten Wicklungsteil (33a) und einen zweiten Wicklungsteil (33b) umfasst, die seriell zwischen einem AC-Anschluss und einem Gegenanschluss geschaltet sind; und wobei der erste Wicklungsteil (33a) magnetisch mit der ersten Wicklung (30) gekoppelt ist und der zweite Wicklungsteil (33b) magnetisch mit der zweiten Wicklung (31) gekoppelt ist.

2. Spannungsgeführter Umrichter (10) nach Anspruch 1, wobei jede Umrichtereinrichtung (11, 11') mindestens drei Phasen umfasst, der spannungsgeführte Umrichter (10) drei AC-Anschlüsse umfasst, wobei, für jede Phase, die AC-Anschlüsse der ersten Umrichtereinrichtung (11) mit einer ersten Wicklung (30) des Dreiwicklungstransformators (13) verbunden sind, die AC-Anschlüsse der zweiten Umrichtereinrichtung (11') mit einer zweiten Wicklung (31) des Dreiwicklungstransformators (13) verbunden sind und die AC-Anschlüsse des spannungsgeführten Umrichters (10) mit einer dritten Wicklung (32) des Dreiwicklungstransformators (13) verbunden sind.

3. Spannungsgeführter Umrichter (10) nach einem der Ansprüche 1 bis 2, ferner umfassend eine Steuereinheit (17), die dazu ausgelegt ist, Director-Ventile der ersten Umrichtereinrichtung (11) und Director-Ventile der zweiten Umrichtereinrichtung (11') derart zu steuern, dass ein gewünschter Differenzphasenwinkel zwischen AC-Spannungen der ersten Umrichtereinrichtung und der zweiten Umrichtereinrichtung erzielt wird.

4. Spannungsgeführter Umrichter (10) nach einem der vorangegangenen Ansprüche, wobei jede Umrichtereinrichtung (11, 11') einen Wellenformer (14) umfasst, der mehrere Wellenformerzellen umfasst, die seriell zwischen den Direktstrompolen (P1, P2) der Umrichtereinrichtung (11, 11') geschaltet sind, und wobei ein Mittelpunkt des Wellenformers (14) mit jeder Kommutierungszelle (CCA, CCB, CCC) der Umrichtereinrichtung (11, 11') verbunden ist, wobei jede Wellenformerzelle ein Schaltelement (40, 40a-d) und eine Energiespeicherung (41) umfasst, wobei der Wellenformer somit dazu ausgelegt ist, mehrere Spannungspegel bereitzustellen, um eine sinusförmige AC-Wellenform bereitzustellen.

5. Spannungsgeführter Umrichter (10) nach einem der vorangegangenen Ansprüche, wobei jede Umrichtereinrichtung einen Verbinder (SWA, SWB, SWC) zwischen jeder Kommutierungszelle und ihrem verbundenen Phasenzweig (3a-c) umfasst, wobei jeder Verbinder antiparallele Thyristoren umfasst.

6. Spannungsgeführter Umrichter (10) nach einem der vorangegangenen Ansprüche, wobei jede Kommutierungszelle (CCA, CCB, CCC) eine Vollbrückenzelle umfasst.

7. Spannungsgeführter Umrichter (10) nach einem der vorangegangenen Ansprüche, wobei jede Wellenformerzelle eine Vollbrückenzelle umfasst.

8. Spannungsgeführter Umrichter (10) nach einem der vorangegangenen Ansprüche, wobei jede Wellenformerzelle eine Halbbrückenzelle umfasst.

9. Spannungsgeführter Umrichter (10) nach einem der vorangegangenen Ansprüche, ferner umfassend eine Steuereinheit (12, 17), die dazu ausgelegt ist, einen Fehler auf den Haupt-Gleichstrompolen ($U_{DC+}$, $U_{DC-}$) zu detektieren; und einen DC-Strom zu blockieren, indem gesteuert wird, dass der Zündwinkel der Director-Ventile (V1-V6) größer ist als 90°, die Wellenformerzellen blockiert werden und der Verbinder blockiert wird.

10. Verfahren zum Steuern eines spannungsgeführten Umrichters (10) umfassend eine erste Umrichtereinrichtung (11), die Folgendes umfasst: mehrere Director-Ventile (V1, V2, V3, V4, V5, V6, SWA, SWB, SWC), wobei jedes Director-Ventil zwei antiparallele Thyristoren umfasst, die in einer Brücke zum Schalten zwischen zwei Zuständen bereitgestellt sind, wobei die Brücke in mindestens einem Phasenzweig (3a-c) bereitgestellt ist, der mit einem ersten Paar von Gleichstrompolen (P1, P2) verbunden ist und einen Mittelpunkt umfasst, der mit einem Wechselstrom- bzw. AC-Anschluss (TA, TB, TC) verbunden ist; und mindestens eine Kommutierungszelle (CCA, CCB, CCC), die mit einem jeweiligen des mindestens einen Phasenzweigs (3a-c) verbunden ist, wobei der spannungsgeführte Umrichter (10) ferner einen Dreiwicklungstransformator (13) umfasst; und eine zweite Umrichtereinrichtung (11'), die die erwähnten Merkmale der ersten Umrichtereinrichtung (11) umfasst, wobei, für jede Phase, der AC-Anschluss der ersten Umrichtereinrichtung (10) mit einer ersten Wicklung des Dreiwicklungstransformators (13) verbunden ist, der AC-Anschluss der zweiten Umrichtereinrichtung (10') mit einer zweiten Wicklung des Dreiwicklungstransformators (13) verbunden ist und ein AC-Anschluss des spannungsgeführten Umrichters (10) mit einer dritten Wicklung des Dreiwicklungstransformators (13) verbunden ist; und jeder Phasenzweig der ersten Umrichtereinrichtung (11) seriell mit jedem Phasenzweig der zweiten Umrichtereinrichtung (11') zwischen Haupt-Gleichstrompolen des spannungsgeführten Umrichters (10) geschaltet ist, wobei die dritte Wicklung (32), für jede Phase, einen ersten Wicklungsteil (33a) und einen zweiten Wicklungsteil (33b) umfasst, die seriell zwischen einem AC-Anschluss und einem Gegenanschluss geschaltet sind; und wobei der erste Wicklungsteil (33a) magnetisch mit der ersten Wicklung (30) gekoppelt ist und der zweite Wicklungsteil (33b) magnetisch mit der zweiten Wicklung (31) gekoppelt ist, wobei das Verfahren die folgenden Schritte umfasst:

Steuern (50) einer Kommutierungszelle (CCA, CCB, CCC), einen Thyristor von mindestens einem Director-Ventil eines verbundenen Phasenzweigs (3a-c) in Sperrrichtung vorzuspannen, wenn der Thyristor das Leiten von Strom stoppen soll; und
Steuern (52) von Director-Ventilen der ersten Umrichtereinrichtung und von Director-Ventilen der zweiten Umrichtereinrichtung, sodass ein gewünschter Differenzphasenwinkel zwischen AC-Spannungen der ersten Umrichtereinrichtung und der zweiten Umrichtereinrichtung erzielt wird.

11. Verfahren nach Anspruch 10, ferner umfassend die folgenden Schritte:

Detektieren eines Fehlers (54), der ein Kurzschluss ist, an allen AC-Anschlüssen (TA, TB, TC); und
Bearbeiten des Fehlers (56), indem die Director-Ventile der ersten Umrichtereinrichtung (11) und der zweiten Umrichtereinrichtung (11') derart gesteuert werden, dass der Differenzphasenwinkel im Wesentlichen 180 Grad für alle Phasen ist.

12. Verfahren nach Anspruch 10, ferner umfassend die folgenden Schritte:

Detektieren eines Fehlers (54), der ein Kurzschluss ist, an nur einem der AC-Anschlüsse (TA, TB, TC); und
Bearbeiten des Fehlers (56), indem die Director-Ventile der ersten Umrichtereinrichtung (11) und der zweiten Umrichtereinrichtung (11') derart gesteuert werden, dass dem Fehler entgegengewirkt wird.

13. Verfahren nach Anspruch 10, ferner umfassend die folgenden Schritte:

Detektieren eines Fehlers (54) an den Haupt-Gleichstrompolen; und
Bearbeiten des Fehlers (56) durch Blockieren von DC-Strom, indem gesteuert wird, dass der Zündwinkel der Director-Ventile (V1-V6) größer als 90° ist, die Wellenformerzellen blockiert werden und der Verbinder blockiert wird.

**Revendications**

1. Convertisseur de source de tension (10) comprenant un premier dispositif de conversion (11) qui comprend :

   une pluralité de vannes directrices (V1, V2, V3, V4, V5, V6), dans lequel chaque vanne directrice comprend deux thyristors antiparallèles prévus dans un pont pour commuter entre deux états, le pont étant prévu dans au moins une branche de phase (3a-c) connectée à une première paire de pôles à courant continu (P1, P2) et comprenant un point médian connecté à une borne de courant alternatif, CA, (TA, TB, TC) ; et
   au moins une cellule de commutation (CCA, CCB, CCC) connectée à l'une respective de la branche ou des branches de phase (3a-c), dans lequel la cellule de commutation (CCA, CCB, CCC) peut être commandée pour polariser en inverse un thyristor d'au moins une vanne directrice d'une branche de phase connectée (3a-c) lorsque le thyristor doit arrêter de conduire du courant ;
   dans lequel le convertisseur de source de tension (10) comprend en outre :

   un transformateur à trois enroulements (13) ; et
   un second dispositif convertisseur (11') comprenant les caractéristiques mentionnées du premier dispositif convertisseur (11) ;

   dans lequel, pour chaque phase, la borne CA du premier dispositif convertisseur (11) est connectée à un premier enroulement du transformateur à trois enroulements (13), la borne CA du second dispositif convertisseur (11') est connectée à un second enroulement du transformateur à trois enroulements (13), et une borne CA (ACa, ACb, ACc) du convertisseur de source de tension (11) est connectée à un troisième enroulement du transformateur à trois enroulements (13) ;
   chaque branche de phase du premier dispositif convertisseur (11) est connectée en série à chaque branche de phase du second dispositif convertisseur (11') entre les pôles à courant continu principaux du convertisseur de source de tension (10) ;
   dans lequel le troisième enroulement (32) comprend, pour chaque phase, une première partie d'enroulement (33a) et une seconde partie d'enroulement (33b) connectées en série entre une borne CA et une borne de compteur ; et dans lequel la première partie d'enroulement (33a) est couplée magnétiquement au premier enroulement (30) et la seconde partie d'enroulement (33b) est couplée magnétiquement au second enroulement (31).

2. Convertisseur de source de tension (10) selon la revendication 1, dans lequel chaque dispositif convertisseur (11, 11') comprend au moins trois phases, le convertisseur de source de tension (10) comprend trois bornes CA, dans lequel, pour chaque phase, les bornes CA du premier dispositif convertisseur (11) sont connectées à un premier enroulement (30) du transformateur à trois enroulements (13), les bornes CA du second dispositif convertisseur (11') sont connectée à un second enroulement (31) du transformateur à trois enroulements (13), et les bornes CA du convertisseur de source de tension (10) sont connectées à un troisième enroulement (32) du transformateur à trois enroulements (13) .

3. Convertisseur de source de tension (10) selon l'une quelconque des revendications 1 et 2, comprenant en outre une unité de commande (17) configurée pour commander les vannes directrices du premier dispositif convertisseur (11) et les vannes directrices du second dispositif convertisseur (11') de sorte qu'un angle de phase différentiel souhaité soit réalisé entre les tensions alternatives du premier dispositif convertisseur et du second dispositif convertisseur.

4. Convertisseur de source de tension (10) selon l'une quelconque des revendications précédentes, dans lequel chaque dispositif convertisseur (11, 11') comprend un dispositif de mise en forme d'ondes (14) comprenant une pluralité de cellules du dispositif de mise en forme d'ondes connectées en série entre les pôles à courant continu (P1, P2) du dispositif convertisseur (11, 11'), et dans lequel un point médian du dispositif du dispositif de mise en forme d'ondes (14) est connecté à chaque cellule de commutation (CCA, CCB, CCC) du dispositif convertisseur (11, 11'), dans lequel chaque cellule du dispositif de mise en forme d'ondes comprend un élément de commutation (40, 40a-d) et un dispositif de stockage d'énergie (41), dans lequel le dispositif de mise en forme d'ondes est donc configuré pour fournir plusieurs niveaux de tension afin de produire une forme d'onde CA sinusoïdale.

5. Convertisseur de source de tension (10) selon l'une quelconque des revendications précédentes, dans lequel chaque dispositif convertisseur comprend un dispositif d'interconnexion (SWA, SWB, SWC) entre chaque cellule de commutation et sa branche de phase connectée (3a-c), chaque dispositif d'interconnexion comprenant des thyristors antiparallèles.

**6.** Convertisseur de source de tension (10) selon l'une quelconque des revendications précédentes, dans lequel chaque cellule de commutation (CCA, CCB, CCC) comprend une cellule à pont complet.

**7.** Convertisseur de source de tension (10) selon l'une quelconque des revendications précédentes, dans lequel chaque cellule du dispositif de mise en forme d'ondes comprend une cellule à pont complet.

**8.** Convertisseur de source de tension (10) selon l'une quelconque des revendications précédentes, dans lequel chaque cellule du dispositif de mise en forme d'ondes comprend une cellule à mi-pont.

**9.** Convertisseur de source de tension (10) selon l'une quelconque des revendications précédentes, comprenant en outre une unité de commande (12, 17) configurée pour détecter un défaut sur les pôles à courant continu principaux $(U_{DC+})$, $U_{DC-})$ ; et pour bloquer le courant continu en contrôlant l'angle de déclenchement des vannes directrices (V1-V6) de façon qu'il soit supérieur à 90°, en bloquant les cellules du dispositif de mise en forme d'ondes et en bloquant le dispositif d'interconnexion.

**10.** Procédé de commande d'un convertisseur de source de tension (10) comprenant un premier dispositif de conversion (11) qui comprend : une pluralité de vannes directrices (V1, V2, V3, V4, V5, V6, SWA, SWB, SWC), dans lequel chaque vanne directrice comprend deux thyristors antiparallèles prévus dans un pont pour commuter entre deux états, le pont étant prévu dans au moins une branche de phase (3a-c) connectée à une première paire de pôles à courant continu (P1, P2) et comprenant un point médian connecté à une borne à courant alternatif, CA (TA, TB, TC) ; et au moins une cellule de commutation (CCA, CCB, CCC) connectée à l'une respective de la branche ou des branches de phase (3a-c), dans lequel le convertisseur de source de tension (10) comprend en outre un transformateur à trois enroulements (13) ; et un second dispositif convertisseur (11') comprenant les caractéristiques mentionnées du premier dispositif convertisseur (11), dans lequel, pour chaque phase, la borne CA du premier dispositif convertisseur (10) est connectée à un premier enroulement du transformateur à trois enroulements (13), la borne CA du second dispositif convertisseur (10') est connectée à un second enroulement du transformateur à trois enroulements (13), et une borne CA du convertisseur de source de tension (10) est connectée à un troisième enroulement du transformateur à trois enroulements (13) ; et chaque branche de phase du premier dispositif convertisseur (11) est connectée en série avec chaque branche de phase du second dispositif convertisseur (11') entre les pôles à courant continu principaux du convertisseur de source de tension (10), dans lequel le troisième enroulement (32) comprend, pour chaque phase, une première partie d'enroulement (33a) et une seconde partie d'enroulement (33b) connectées en série entre une borne CA et une borne de compteur ; et dans lequel la première partie d'enroulement (33a) est couplée magnétiquement au premier enroulement (30) et la seconde partie d'enroulement (33b) est couplée magnétiquement au second enroulement (31), le procédé comprenant l'étape suivante :

commande (50) d'une cellule de commutation (CCA, CCB, CCC) pour polariser en inverse un thyristor d'au moins une vanne directrice d'une branche de phase connectée (3a-c) lorsque le thyristor doit arrêter de conduire le courant ; et
commande (52) des vannes directrices du premier dispositif convertisseur et des vannes directrices du second dispositif convertisseur de sorte qu'un angle de phase différentiel souhaité soit réalisé entre les tensions alternatives du premier dispositif convertisseur et du second dispositif convertisseur.

**11.** Procédé selon la revendication 10, comprenant en outre les étapes suivantes :

détection d'un défaut (54) du type court-circuit sur toutes les bornes CA (TA, TB, TC) ; et
traitement du défaut (56) en commandant les vannes directrices du premier dispositif convertisseur (11) et du second dispositif convertisseur (11') de sorte que l'angle de phase différentiel soit essentiellement de 180 degrés pour toutes les phases.

**12.** Procédé selon la revendication 10, comprenant en outre les étapes suivantes :

détection d'un défaut (54) du type court-circuit sur une seule des bornes CA (TA, TB, TC); et
traitement du défaut (56) en commandant les vannes directrices du premier dispositif convertisseur (11) et du second dispositif convertisseur (11') de façon à prendre les contre-mesures nécessaires.

**13.** Procédé selon la revendication 10, comprenant en outre les étapes suivantes :

détection d'un défaut (54) sur les pôles à courant continu principaux ; et

et traitement du défaut (56) en bloquant le courant continu à l'aide du contrôle de l'angle de déclenchement des vannes directrices (V1-V6) de façon qu'il soit supérieur à 90°, en bloquant les cellules du dispositif de mise en forme d'ondes et en bloquant le dispositif d'interconnexion.

Fig. 1

Fig. 2A

Fig. 2B

Fig. 3

Fig. 4

Fig. 5

Fig. 6

Fig. 7A        Fig. 7B        Fig. 7C

Fig. 8

**EP 3 192 161 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014082657 A1

- WO 2011124258 A1